# EUROPEAN PATENT SPECIFICATION

(11) **EP 2 939 948 B1**
(45) Date of publication and mention of the grant of the patent: **21.11.2018**
(21) Application number: 13866890.0
(22) Date of filing: 25.11.2013
(51) Int. Cl.: B65D 65/40, B32B 27/32, B32B 9/02, B32B 27/08, B32B 27/34, B32B 27/30

(54) **WRAP FILM**
VERPACKUNGSFOLIE
FILM D'EMBALLAGE

(30) Priority: 28.12.2012 JP 2012286399
(43) Date of publication of application: 04.11.2015
(73) Proprietor: Mitsubishi Chemical Corporation, Tokyo (JP)
(72) Inventor: MOGAWA, Ryo, Nagahama-shi Shiga 526-0023 (JP); NEMOTO, Tomoyuki, Nagahama-shi Shiga 526-0023 (JP); NOGUCHI, Akira, Nagahama-shi Shiga 526-0243 (JP)
(74) Representative: Ter Meer Steinmeister & Partner
(86) International application number: PCT/JP2013/081605
(87) International publication number: WO 2014/103587

(56) References cited:
- WO-A1-2005/082981
- WO-A1-2008/004510
- CN-A- 101 362 844
- JP-A- 2002 327 074
- JP-A- 2002 338 704
- JP-A- 2008 221 813

## Description

### TECHNICAL FIELD

The present invention relates to a wrap film, and more particularly, to a wrap film obtained from a plant-derived polyethylene in the form of a plant-derived resin as a main raw material.

### BACKGROUND ART

Wrap films are distinguished from stretch packaging films for business use, and have been used, for example, as a film for wrapping a home-cooked food or the like placed on a pottery or a plastic container.

The wrap films are ordinarily wound into a cylindrical roll shape and accommodated in a paper box equipped with a cutter blade. Upon wrapping, the wrap film is pulled out of the paper box to cover a food on a container, and brought into press contact with the cutter blade fitted to the paper box to form perforated holes thereon, along which the film is then torn out. The tearing force is propagated in a width direction of the film to allow the film to cut therealong, and an edge of the cut film is adhered or clung on the container for packaging. In consequence, the wrap films have been required to have various properties including not only a good transparency but also a good adhesion property to a container and a good cutting suitability upon cutting the films pulled out of a box, etc.

Many of the currently marketed wrap films are films comprising a drawn polyvinylidene chloride-based resin as a main component, and films comprising an extrusion-cast resin such as a polyethylene-based resin, a plasticized polyvinyl chloride-based resin, a poly 4-methyl pentene-1-based resin, etc., as a main component.

In recent years, with the increase in awareness of environmental problems, large importance has been placed on effective utilization of exhaustible resources. For this reason, there have been noticed lactic acid-based polymers as a natural plant-derived resin obtained from starches such as corns and potatoes, plant-derived polyethylenes obtained using a bio ethanol produced by refining corns, etc. In particular, the lactic acid-based polymers not only can be mass-produced, but also can exhibit an excellent transparency. Therefore, researches and developments of wrap films using the lactic acid-based polymers have been intensively conducted.

For example, Patent Literature 1 describes a biodegradable wrap film capable of satisfying a cutting suitability, a packaging suitability and a heat resistance as characteristics of the wrap film at the same time, which comprises a lactic acid-based resin composition having a storage elastic modulus at 40°C of 100 MPa to 3 GPa, a storage elastic modulus (E') at 100°C of 30 MPa to 500 MPa and a peak value of a loss tangent (tanδ) of 0.1 to 0.8 as measured at a frequency of 10 Hz and a distortion of 0.1% by a dynamic viscoelasticity measuring method according to the Method A of JIS K-7198.

In Patent Literature 2, there is described a shrink sheet-like material including outermost layers comprising an olefin-based polymer as a main component and at least one layer comprising a polylactic acid (lactic acid-based polymer) as a main component which is located between the layers comprising an olefin-based polymer as a main component, and it is also described that an adhesive layer comprising an acryl-modified polyethylene-based resin is further interposed between the respective layers comprising an olefin-based polymer as a main component and the layer comprising a polylactic acid as a main component.

However, in the system as described in Patent Literature 1 in which a plasticizer is compounded in the lactic acid-based polymer, the glass transition temperature Tg of the lactic acid-based polymer is reduced to near room temperature. For this reason, if a wrap film is produced by a casting method, etc., in which the raw material is rapidly cooled, the material tends to be formed into a sheet while kept in a non-crystalline state, and therefore tends to have a low elastic modulus. When the resulting elongated sheet is directly wound into a roll, there tends to arise such a problem that the rolled sheet suffers from blocking.

Also, if the lactic acid-based polymer is exposed to front and rear surfaces of the wrap film, the molecular weight of the lactic acid-based polymer tends to be reduced owing to hydrolysis thereof with time, thereby causing such a problem that the film further suffers from blocking.

In addition, in order to attain a function as a wrap film, as described above, the film is required to have various properties not only a good transparency but also a good adhesion property to a container and a good cutting suitability upon cutting the films pulled out, etc. However, it may be difficult to produce a wrap film having the above various properties by using the lactic acid-based polymer as a main raw material. In particular, in the case where the wrap film is in the form of a laminated film having a multilayer structure as described in Patent Literature 2, it is not easy to produce the wrap film having an excellent adhesion to containers.

Furthermore, since commercially available wrap films have a low average loss tangent (tanδ) near a temperature of -40 to 0°C, there occurs such a tendency that the films are deteriorated in adhesion to containers when used under low-temperature conditions such as in a freezer.

### CITATION LIST:

### PATENT LITERATURE

Patent Literature 1: International Patent Application Laid-Open No. WO 2005/082981
Patent Literature 2: Japanese Patent Application Laid-Open (KOKAI) No. 2002-19053

WO2008004510 discloses a wrapping laminated film comprising surface layers containing polyolefinic polymer (A) as main component and an intermediate layer containing a lactic acid resin composition (B) as main component, exhibiting a storage elastic modulus (E') of 1-4 GPa measured at 20°C and frequency of 10 Hz by dynamic viscoelasticity measurement, and loss tangent (tan delta) peak value of 0.1-8 at peak temperature of 20-70°C.

### SUMMARY OF INVENTION

### PROBLEMS TO BE SOLVED BY THE INVENTION

The present invention has been accomplished to solve the above problems of the conventional art. An object of the present invention is to provide a wrap film that is free from occurrence of blocking and reduction in molecular weight upon storage, and deterioration in adhesion to containers even when used under low-temperature conditions such as in a freezer, notwithstanding the film is produced while effectively utilizing exhaustible resources.

### MEANS FOR SOLVING PROBLEMS

That is, in an aspect of the present invention, there is provided a wrap film as defined in claim 1. According to one aspect of the present disclosure a wrap film comprises a laminated film comprising at least three layers including both surface layers comprising a plant-derived polyethylene resin, and which has a storage elastic modulus (E') at 20°C of 100 MPa to 4 GPa and an average loss tangent (tanδ) at - 40 to 0°C of not less than 0.08 as measured at an oscillation frequency of 10 Hz and a distortion of 0.1% by a dynamic viscoelasticity measuring method described in the Method A of JIS K 7198.

### EFFECTS OF THE INVENTION

In accordance with the present invention, there is provided a wrap film that is free from occurrence of blocking and reduction in molecular weight upon storage, and deterioration in adhesion to containers even when used under low-temperature conditions such as in a freezer, notwithstanding the film is produced while effectively utilizing exhaustible resources. Therefore, the present invention has an enhanced industrial value.

### PREFERRED EMBODIMENTS FOR CARRYING OUT THE INVENTION

The present invention will be described in detail below. The wrap film of the present invention is a laminated film constituted of at least three layers including opposite surface layers comprising a plant-derived polyethylene resin component. The intermediate layer comprises any of an aliphatic polyamide polymer, an ethylene-vinyl alcohol copolymer and a polypropylene as a main component.

The wrap film of the present invention has a laminated structure including surface layers comprising a plant-derived polyethylene resin, so that it is possible to incorporate additives such as an anti-fogging agent and an adhesive into the opposite surface layers and therefore also enhance an anti-fogging property and an adhesion property of the resulting film. Further, since the average value of loss tangent (tanδ) at a low temperature (-40 to 0°C) is high as compared to that of a petroleum-derived linear low-density polyethylene resin, it is possible to impart a good adhesion property to containers, etc., under low-temperature conditions.

The plant-derived polyethylene resin is a composition comprising one or more resins selected from the group consisting of a linear low-density polyethylene and a high-density polyethylene which are produced using ethanol extracted from sugar cane.

Of these resins, those plant-derived polyethylene resins having a density of 0.915 to 0.925 g/cm³ are according to the invention. When the plant-derived polyethylene resin has a density of not less than 0.915 g/cm³, it is possible to maintain a good elastic recovery property required for a wrap film. On the other hand, when the plant-derived polyethylene resin has a density of not more than 0.940 g/cm³, it is possible to impart a good softness required for a wrap film upon contact therewith.

The plant-derived polyethylene preferably has a biobased content (%) of not less than 80% (ASTM 6866: measurement of a content of radiocarbon ¹⁴C). When the biobased content of the plant-derived polyethylene is not less than 80%, it is possible to reduce an amount of CO₂ generated therefrom by about 70 to about 74% as compared to petroleum-based polyethylene. Thus, it is possible to effectively utilize exhaustible resources and reduce an amount of CO₂ generated which causes a greenhouse gas to a large extent.

From the viewpoint of a good extrusion processability, preferred is the plant-derived polyethylene having a melt flow rate of 0.5 to 10 g/10 min (as measured at 190°C under a load of 21.18 N according to JIS K 7210), and more preferred is the plant-derived polyethylene having a melt flow rate of 1.0 to 5.0 g/10 min. When the melt flow rate of the plant-derived polyethylene is not less than 0.5 g/10 min, it is possible maintain a good extrusion processability of the plant-derived polyethylene. On the other hand, when the melt flow rate of the plant-derived polyethylene is not more than 10 g/10 min, it is possible to suitably maintain a good film-forming stability and suppress occurrence of thickness variation and variation in mechanical strength, etc.

Examples of the aliphatic polyamide polymer include a ring-opening polymerization product of a cyclic lactam, a polycondensate of an aminocarboxylic acid, and a polycondensate of a dicarboxylic acid and a diamine. More specifically, as the polyamide resin used herein, a homopolymer of ε-caprolactam called polyamide 6 or a homopolymer of undecane lactam obtained by ring opening polycondensation thereof which is called polyamide 11, are preferred, because they are inexpensively available for the use of extrusion molding, and can exhibit a high quality from the viewpoint of a wrap film for food owing to excellent various gas-barrier properties thereof without excessive increase in costs.

As the polyamide-based resin, there may be mentioned an aromatic polyamide resin, an aliphatic polyamide resin and a mixture thereof. Of these polyamides, in view of a heat resistance and a barrier property required for a wrap film as well as low costs for raw materials, in general, there is preferably used the aliphatic polyamide resin. Examples of the polyamide-based resin include polyamides obtained by polycondensation of an aliphatic, alicyclic or aromatic diamine such as hexamethylenediamine, decamethylenediamine, dodecamethylenediamine, trimethyl hexamethylenediamine, 1,3- or 1,4-bis(aminomethyl)cyclohexane, bis(p-aminocyclohexyl methane) and m- or p-xylylenediamine with an aliphatic, alicyclic or aromatic dicarboxylic acid such as adipic acid, suberic acid, sebacic acid, cyclohexanedicarboxylic acid, terephthalic acid and isophthalic acid, polyamides obtained by condensation of ε-aminocaproic acid, 11-aminoundecanoic acid, etc., polyamides obtained from a lactam such as ε-caprolactam and ε-laurolactam, and copolyamides of these polyamides. Specific examples of the polyamide-based resin include polyamide-6, polyamide-6,6, polyamide-6,10, polyamide-9, polyamide-11, polyamide-12, polyamide-6/6,6, polyamide-6,6/6,10 and polyamide 6/11. Of these polyamides, from the viewpoint of a good moldability, those polyamides having melting point of 170 to 250°C, and those polyamides having an excellent impact strength under low-temperature conditions. In the present invention, in particular, polyamide-6 or polyamide-11 can be suitably used.

The wrap film may be often heated in an electronic oven, and is therefore required to have a good heat resistance. Both polyamide-6 and polyamide-11 have a very high heat-resisting temperature as compared to various polyolefin rains. Therefore, from the viewpoint of attaining a good heat resistance of the film, it is preferred that polyamide-6 and polyamide-11 are used in the intermediate layer of the film.

The polyamide-11 is a plant-derived polyamide resin synthesized from a castor oil extracted from a castor-oil plant, and characterized by an excellent low-temperature performance thereof as compared to the other polyamide resins. Therefore, the use of the polyamide-11 in the intermediate layer of a wrap film is preferred from the viewpoints of reducing an amount of exhaustible resources used and preventing deterioration in properties of the wrap film under the low-temperature environmental conditions.

The intermediate layer of the wrap film according to the present invention is formed of a thermoplastic resin having an oxygen-barrier property and a moisture absorption property which is capable of thermoforming. Examples of the preferred resin used for the intermediate layer include an ethylene-vinyl alcohol copolymer (EVOH). The reason therefor is that when using EVOH in the intermediate layer of the wrap film, it is possible to enhance a quality of the film without excessive increase in costs from the viewpoint of a wrap film for food.

In the present invention, in the case where the ethylene-vinyl alcohol copolymer (EVOH) is used in the intermediate layer, the content of ethylene in EVOH is usually not less than 20 mol%, and preferably not less than 25 mol%, and is also not more than 47 mol%, and preferably not more than 44 mol%, from the viewpoint of keeping a good film-forming stability. Also, the degree of saponification of EVOH is not less than 90 mol%, and preferably not less than 95 mol%. When the ethylene content and the saponification degree in the ethylene-vinyl alcohol copolymer are controlled to the above-specified respective ranges, it is possible to maintain a good oxygen-barrier property of the film as well as a good co-extrusion property and a good strength of the film.

The melt flow rate (MFR) of the ethylene-vinyl alcohol copolymer is not particularly limited, and is usually not less than 0.2 g/10 min, preferably 0.5 to 18 g/10 min, and more preferably 1 to 15 g/10 min (as measured at 190°C under a load of 21.18 N according to JIS K 7210). When the melt flow rate of the ethylene-vinyl alcohol copolymer is not less than 0.2 g/10 min, the resulting resin composition can exhibit a stable extrusion moldability. On the other hand, when the melt flow rate of the ethylene-vinyl alcohol copolymer is not more than 20 g/10 min, the resulting resin composition can maintain a good film-forming stability to thereby suitably suppress thickness variation and deterioration or variation in mechanical strength of the resulting film, etc.

Examples of the polypropylene-based resin used in the present invention include a homopolymer of propylene, and a random copolymer or a block copolymer of propylene and the "other monomer copolymerizable with propylene". When compounding such a polypropylene-based resin as a main component of the intermediate layer of the wrap film, the resulting wrap film can be enhanced in various properties as a packaging suitability such as an adhesion property to containers. In addition, pellets of the resin can be enhanced in storage stability, and the resin composition constituting the intermediate layer can be enhanced in strength and heat resistance. Meanwhile, the "main component" as used in the present invention is intended to mean that the content of the main component (polypropylene-based resin) in the composition is usually not less than 50% by mass, and preferably not less than 70% by mass, and further the case where the main component (polypropylene-based resin) is used solely in the composition, is included (i.e., inclusive of 100%) (hereinafter defined in the same way) .

Examples of the other monomer copolymerizable with propylene include α-olefins having 4 to 20 carbon atoms such as ethylene, 1-butene, 1-hexene, 4-methyl pentene-1 and 1-octene; and dienes such as divinyl benzene, 1,4-cyclohexadiene, dicyclopentadiene, cyclooctadiene and ethylidene norbornene. Two or more of these monomers may be copolymerized with propylene.

Since the wrap film is required to have a good flexibility from the standpoint of imparting various properties such as adhesion property to containers thereto, a resin or a mixed resin obtained from one or two components selected from the group consisting of a propylene-ethylene random copolymer, a propylene-ethylene-butene-1 copolymer, a reactor-type polypropylene-based elastomer, a propylene-ethylene copolymer and a propylene-α-olefin copolymer is preferably used therein.

The melt flow rate (MFR) of the resin or the mixed resin obtained from one or two components selected from the group consisting of the above polypropylene-based resins is not particularly limited, and the MFR (as measured at 230°C under a load of 21.18 N according to JIS K 7210) is usually not less than 0.2 g/10 min, preferably 0.5 to 18 g/10 min and more preferably 1 to 15 g/10 min. When the MFR of the polypropylene-based resin is not less than 0.2 g/10 min, the obtained resin composition can exhibit a stable extrusion processability. When the MFR of the polypropylene-based resin is not more than 20 g/10 min, the resin composition can be stably formed into a film shape upon molding, and the resulting film is free from thickness variation and deterioration or variation in mechanical strength, etc.

Examples of the above polypropylene-based resin include "NOVATEC PP" and "WINTEC"(tradenames) both produced by Japan Polypropylene Corp., "NOBLEN" (tradename) produced by Sumitomo Chemical Co., Ltd., "PRIME POLYPRO" and "PRIME TPO" (tradenames) both produced by Prime Polymer Co., Ltd., and "VERSIFY" (tradename) produced by The Dow Chemical Company.

The both inside and outside surface layers (hereinafter referred to merely as "surface layers") may be formed of a surface layer-forming composition comprising the plant-derived polyethylene resin.

The surface layers may be compounded not only with the above plant-derived polyethylene resin, but also with an anti-fogging agent, in order to enhance an anti-fogging property of the resulting film. Further, an adhesive may be compounded in the surface layers to enhance an adhesion property of the resulting film.

More specifically, in order to further enhance various performances such as an anti-fogging property, an antistatic property, a slip property, an adhesion property, etc., the following additives may be appropriately compounded in the surface layers. Examples of the various additives include aliphatic alcohol-based fatty acid esters as a compound obtained from an aliphatic alcohol having 1 to 12 carbon atoms and preferably 1 to 6 carbon atoms and a fatty acid having 10 to 22 carbon atoms and preferably 12 to 18 carbon atoms. Specific examples of the aliphatic alcohol-based fatty acid esters include at least one compound selected from the group consisting of monoglycerin oleate, polyglycerin oleate, polyglycerin polyricinolate, glycerin triricinolate, glycerin acetyl ricinolate, polyglycerin stearate, polyglycerin laurate, glycerin acetyl laurate, methyl acetyl ricinolate, ethyl acetyl ricinolate, butyl acetyl ricinolate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate and polyethylene glycol sorbitan laurate; polyalkylene ether polyols, more specifically, such as polyethylene glycol and polypropylene glycol; and paraffin-based oils. The aliphatic alcohol-based fatty acid esters may be compounded in the surface layers in an amount of 0.1 to 12 parts by mass and preferably 1 to 8 parts by mass based on 100 parts by mass of the resin components constituting the respective layers.

The surface layers and the intermediate layer may be appropriately compounded with various additives such as a heat stabilizer, an antioxidant, a UV absorber, an anti-blocking agent and a light stabilizer, unless the functions of the packaging film according to the present invention are adversely affected.

In order to prevent occurrence of delamination between the surface layers formed of the plant-derived polyethylene resin and the intermediate layer, an adhesive resin layer may also be provided, unless the functions of the film according to the present invention are adversely affected. As an adhesive resin forming the adhesive resin layer, there may be mentioned generally used acid-modified polyolefin resins, etc.

In addition, in order to accomplish both of a suitable interlaminar bonding strength of the film and low costs for raw materials, the adhesive resin used for forming the adhesive resin layer may be a resin selected from the group consisting of the acid-modified polyolefin resins, the plant-derived polyethylene resins, the petroleum-derived linear low-density polyethylene, etc. These resins may be used in the form of a mixture of any two or more thereof.

The mixing ratio of the plant-derived polyethylene to the acid-modified polyolefin (plant-derived polyethylene/acid-modified polyolefin) is preferably 80 to 40/20 to 60, and more preferably 30 to 50/70 to 50.

When the mixing ratio lies within the above-specified range, it is possible not only to maintain a high interlaminar bonding strength between the plant-derived polyethylene resin in the surface layers and the polyamide resin in the intermediate layer, but also to suppress increase in costs for raw materials.

Meanwhile, the adhesive layer-forming composition may be compounded with a compatibilizing agent, unless the functions of the wrap film are adversely affected. In addition, in order to impart various performances such as an anti-fogging property, an antistatic property, a slip property, an adhesion property, etc., to the wrap film, the following additives may be appropriately compounded in the adhesive layer-forming composition. Examples of the various additives include aliphatic alcohol-based fatty acid esters as a compound obtained from an aliphatic alcohol having 1 to 12 carbon atoms and preferably 1 to 6 carbon atoms and a fatty acid having 10 to 22 carbon atoms and preferably 12 to 18 carbon atoms. Specific examples of the aliphatic alcohol-based fatty acid esters include at least one compound selected from the group consisting of monoglycerin oleate, polyglycerin oleate, polyglycerin polyricinolate, glycerin triricinolate, glycerin acetyl ricinolate, glycerin monoacetomonostearate, glycerin diacetomonolaurate, glycerin diacetomonooleate, polyglycerin stearate, polyglycerin laurate, methyl acetyl ricinolate, ethyl acetyl ricinolate, butyl acetyl ricinolate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate and polyethylene glycol sorbitan laurate; polyalkylene ether polyols, more specifically, such as polyethylene glycol and polypropylene glycol; and paraffin-based oils, polybutene, terpene resin and petroleum resins. The aliphatic alcohol-based fatty acid esters may be compounded in the adhesive layer in an amount of 0.1 to 30 parts by mass and preferably 3 to 25 parts by mass based on 100 parts by mass of the resin components constituting the adhesive layer.

The thickness of the adhesive layer is preferably 0.3 to 5 µm from the standpoint of good functions thereof. When the thickness of the adhesive layer lies within the above-specified range, it is possible to exhibit a good adhesion property between the respective opposite surface layers and the intermediate layer, and suitably attain a good film-forming stability upon molding the film. In order to more suitably ensure a sufficient thickness ratio of the intermediate layer, the thickness of the adhesive layer is preferably 0.5 to 3 µm.

The wrap film according to the present invention may be in the form of a laminated film comprising the both surface layers and the intermediate layer. The laminated film has three or more layers comprising at least the surface layer, the intermediate layer and the surface layer which are arranged in this order. The other appropriate layer may also be introduced into the wrap film, if required, in order to improve mechanical properties or adhesion between the respective layers. Furthermore, an adhesive layer or a reclaimed material layer may also be provided between the surface layers and the intermediate layer.

For example, a layer A' having the same composition as that of the surface layers A may be provided in the wrap film as a layer other than the opposite surface layers. In addition, two or more layers having the same composition as that of the intermediate layer B may be provided between the the opposite surface layers. More specifically, when the adhesive layer and the reclaimed material layer are represented by C and D, respectively, the following layer structures may be mentioned.

That is, examples of the layer structures include five layer structures such as A/C/B/C/A, six layer structures such as A/C/B/B/C/A, A/D/C/B/C/A and A/C/D/B/C/A, seven layer structures such as A/C/B/A'/B/C/A, A/C/B/C/B/C/A, A/D/C/B/C/D/A and A/C/D/B/D/C/A, etc. In these layer structures, the resin compositions or thickness ratios of the respective layers may be the same or different from each other.

In the wrap film of the present invention, the ratio of a thickness of the intermediate layer to a whole thickness of the film is preferably 5 to 50%. When the thickness ratio of the intermediate layer lies within the above-specified range, it becomes possible to easily design a film capable of satisfying the respective characteristic values of the above dynamic viscoelasticity (E', tanδ). For example, it is possible to attain a suitable film-forming stability upon forming the film by a T-die method, and it is also possible to relatively easily impart to the wrap film, mechanical properties required for allowing the wrap film to exhibit a suitable cutting property or a relaxation characteristic required for allowing the wrap film to exhibit a suitable adhesion property to containers. In addition, even when the wrap film thus formed is stored in a wound state, the film is free of occurrence of blocking, and can exhibit good anti-fogging property and adhesion property to containers. Further, the wrap film hardly suffers from reduction in molecular weight owing to hydrolysis with time, and can exhibit a good adhesion property between the respective layers.

Furthermore, in the case where large importance is placed on stable film-forming processability and flexibility, the ratio of the thickness of the intermediate layer to a whole thickness of the wrap film is more preferably 10 to 40%, and still more preferably 15 to 30%.

Meanwhile, when the two or more intermediate layers are formed as described above, the thickness ratio of the intermediate layers may be calculated from a total thickness of all the intermediate layers.

As described above, the wrap film of the present invention may comprise a reclaimed material layer, unless the effects of the present invention are adversely affected. For example, as the material for forming the reclaimed material layer, there may be used trimming loss of the film which occurs upon cutting and trimming both edges of the film, as well as surplus components remaining after forming the adhesive layer and defective molded products. Thus, it is possible to prevent occurrence of wastes of raw materials and thereby reduce costs for the raw materials.

The reclaimed material layer may be provided between the surface layer and the adhesive layer or between the intermediate layer and the adhesive layer. For example, the respective surface layers, the intermediate layer or the adhesive layer may is each constructed with a two-layer structure, and the trimming loss obtained from both edges of the film is returned and fed back for use as a material of one layer of the two-layer structure to thereby provide the reclaimed material layer between the surface layer and the adhesive layer or between the intermediate layer and the adhesive layer. In this case, the mixing ratio between the three components may be adjusted depending upon not only the thickness ratio or compositional ratio of the respective layers, but also which layer among the surface layer, intermediate layer and adhesive layer is selected as the layer in which the material to be returned is incorporated.

The thickness (whole thickness) of the wrap film according to the present invention may be within the range ordinarily used for the wrap film, more specifically, may be 6 to 30 µm, and is preferably 8 to 20 µm.

The wrap film of the present invention is required to have (1) a storage elastic modulus (E') at 20°C of 100 MPa to 4 GPa as measured at a frequency of 10 Hz and a distortion of 0.1% by a dynamic viscoelasticity measuring method, and (2) an average value of loss tangent (tanδ) at - 40 to 0°C of not less than 0.08.

The film capable of satisfying both of the above requirements (1) and (2) can be suitably used as a wrap film. That is, when the storage elastic modulus (E') of the film is less than 100 MPa, the film tends to be excessively soft and therefore deteriorated in cutting property, for example, upon cutting the film pulled out of a paper box owing to excessively small stress against deformation thereof. On the other hand, when the storage elastic modulus (E') of the film is more than 4 GPa, the film tends to be hard and hardly elongated, and therefore deteriorated in pullout property upon pulling the film out of a paper box. In addition, when the average value of loss tangent (tanδ) at - 40 to 0°C of the film is not less than 0.08, it is possible to prevent occurrence of instantaneous restoration attitude against deformation of the film even under low-temperature environmental conditions, so that the film can suitably exhibit a good adhesion property to containers under low-temperature environmental conditions.

Meanwhile, the tanδ (loss tangent) means a ratio of a loss elastic modulus (E") to a storage elastic modulus (E'), i.e., a loss tangent (tanδ = E"/E'). This means that in such a temperature range that the value of loss tangent (tanδ = E"/E') is large, a loss elastic modulus (E") of the film, i.e., a viscosity of the film among viscoelastic characteristics thereof, contributes to properties thereof to a large extent. When evaluating a peak value of the tanδ and a peak temperature thereof, a large scale for judging an adhesion property of the film to containers upon packaging and a stress relaxation attitude of the film in a packaging process can be attained.

The film capable of satisfying both of the above requirements (1) and (2) may be produced, for example, by suitably selecting constituting components of the intermediate layer, surface layers and adhesion layer (together with the reclaimed material layer, if required) such as kinds, Tg and compounding ratios of resins as a main component of the respective layers, etc., and appropriately controlling thickness ratios, film-forming methods and processing conditions, for example, heat treatment conditions after the film formation, of the intermediate layer, surface layers and adhesion layer (together with the reclaimed material layer, if required) in a well-balanced manner.

The process for producing the wrap film according to the present invention is explained below, though the present invention is not particularly limited thereto.

First, when the constituting raw materials for the respective layers are in the form of a mixed composition, the constituting raw materials for the respective layers are previously mixed with each other and, if required, preferably pelletized. As the mixing method, there may be used the method in which the raw materials are previously pre-compounded, for example, using a co-rotation twin screw extruder, a kneader, a Henschel mixer, etc., or the method in which the raw materials are dry-blended and then directly charged into a film extruder. In any of the above methods, it is required to take into consideration, reduction in molecular weight of the raw materials owing to decomposition thereof. Of these methods, in order to obtain a uniform mixture, preferred is the pre-compounding method.

Meanwhile, the constituting raw materials for the respective layers are as described above. As the raw materials for the adhesive layer-forming resins, there may be used pellets comprising well-controlled components which are prepared by adding an acid-modified polyethylene resin to trimming loss of the wrap film.

Next, the constituting raw materials for the respective layers are charged into separate extruders, and melted and then extruded therefrom, and further subjected to T-die molding or inflation molding to co-extrude the materials into a laminated film. In this case, it is practically preferred that a molten material extruded from a T-die is directly taken up into a film shape while rapidly cooling the material by a casting roll, etc.

In the case where large importance is placed on a heat resistance and a cutting property of the film, after cooling and solidifying the molten extruded sheet by a chilled roll, the resulting film is preferably heated to a temperature not higher than a crystallization temperature of the resin used therein, and then subjected to longitudinal drawing step in which the film is drawn at a draw ratio of 1.2 to 5.0 times in a longitudinal direction thereof, or subjected to tenter drawing in which the film is drawn at a draw ratio of 1.2 to 5.0 times in a lateral direction thereof by utilizing a difference in rotating speed between nip rolls.

In addition, the film may be subjected to a sequential biaxial drawing method, and a flat drawing method in which the film is subjected to simultaneous biaxial drawing, unless the effects of the present invention are adversely affected.

The drawing temperature is controlled such that the temperature of the extruded sheet falls in the range of 70 to 115°C, and more preferably 90 to 110°C. The drawing temperature falling within the above-specified range is preferred, because it is possible to control an elastic modulus of each of the intermediate layer-forming composition and the plant-derived polyethylene resin used in the surface layers near to a suitable range. Also, the drawing ratio is preferably within the range of 1.2 to 5.0 times, and more preferably 1.5 to 3.0 times. When the draw ratio lies within the above-specified range, the resulting film can be enhanced in cutting property without any troubles such as breakage of the extruded sheet and whitening thereof.

Also, in the case where large importance is placed on productivity and economy, the resin materials are preferably melted and extruded from a ring die and then subjected to inflation molding. In this case, as a cooling method, there may be used either the method of cooling the molded tube from an outside of the tube or the method of cooling the molded tube from both an outside and an inside of the tube.

The thus obtained film may be then subjected, if required, to longitudinal drawing between heating rolls, and various heat treatments such as heat-setting and aging, etc., according to the aimed objects such as reduction in heat shrinkage rate or natural shrinkage rate of the film as well as suppression of occurrence of width shrinkage of the film.

With respect to the heat treatment conditions, the heat treatment temperature is preferably controlled to the range of 40 to 100°C, and more preferably 60 to 90°C. When the heat treatment temperature is not lower than 40°C, the effect of the heat treatment can be attained to a sufficient extent. When the heat treatment temperature is not higher than 100°C, there tends to hardly occur such a molding problem that the film is stuck onto rolls.

In addition, for the purposes of imparting and promoting an anti-fogging property, an antistatic property, an adhesion property, etc., the film may be subjected to various treatments such as corona treatment and aging, and further to surface treatments such as printing and coating or surface processing steps.

The resulting film may be trimmed at both edges and slit into a width as aimed to thereby obtain a film product.

### EXAMPLES

The present invention is described in more detail by Examples and Comparative Examples below. However, the following Examples are only illustrative and not intended to limit the present invention thereto. Meanwhile, various measurements and evaluations of films as described in the present specification were conducted as follows. In the following descriptions, the flow direction of a film from an extruder is referred to as a "longitudinal direction" (hereinafter also referred to as "MD"), whereas the direction perpendicular to the flow direction is referred to as a "lateral direction" (hereinafter also referred to as "TD").

### (1) E', tanδ:

According to a dynamic viscoelasticity measuring method described in the Method A of JIS K 7198, using a dynamic viscoelasticity analyzer "DVA-200 Model" manufactured by I.T. Keisoku Seigyo Co., Ltd., the dynamic viscoelasticity of a film was measured in a length direction thereof at an oscillation frequency of 10 Hz and a distortion of 0.1% while the temperature therein was raised at a rate of 1°C/min from -100°C to 200°C to obtain measurement data. The storage elastic modulus (E') at 20°C of the film and the loss tangent (tanδ) at -40 to 0°C were determined from the thus obtained data.

### (2) Biobased content:

According to the method for determining a biobased content as prescribed in ASTM D 6866, the obtained film is subjected to measurement of a content of radiocarbon ¹⁴C in a resin used in the surface layers to determine a biobased content (%) thereof.

### (3) Density:

According to a density gradient method as prescribed in the Method D of JIS K 7112, the obtained film was tested to determine a density (g/cm³) of a resin of a surface layer used therein.

### (4) Film-forming stability:

Upon forming a film, in particular, in the case where the film has a glass transition temperature (Tg) near room temperature, the film tends to be adhered onto a casting roll upon extrusion thereof, so that a stable formation of the film tends to be disturbed.

In consequence, the film molded by a T-die molding method was observed to examine a casting stability and a degree of stickiness to the roll, and evaluate these properties according to the following ratings.
A: Extremely stable;
B: Stable; and
C: Unstable.

### (5) Production stability:

The film molded by a Ti-die molding method was evaluated for its production stability according to the following ratings.
A: The film could be stably produced without causing any thickness variation or breakage owing to a difference in fluidity between the respective layers upon extrusion thereof, during production of the film;
B: The film was produced without breakage, though it suffered from thickness variation owing to a difference in fluidity between the respective layers upon extrusion thereof, during production of the film; and
C: The film suffered from remarkable thickness variation owing to a difference in fluidity between the respective layers upon extrusion thereof, and breakage of the film frequently occurred, during production of the film.

### (6) Anti-blocking property:

The obtained film in the form of a roll was stored in a thermostatic chamber held at a temperature of 43°C and a relative humidity of 40% for 5 days to observe a surface condition and a rewinding property thereof and evaluate these properties according to the following ratings.
A: No blocking between portions of the film occurred;
B: Slight blocking between portions of the film occurred, but still acceptable without any practical problem; and
C: blocking between portions of the film occurred so that the film was non-releasable and non-rewindable, and unacceptable with a practical problem.

### (7) Adhesion to containers:

A bowl-shaped pottery container having a diameter of 10 cm and a depth of 5 cm was wrapped with the film to evaluate an adhesion of the film to the container according to the following ratings.
A: Adequately wrapped with the film;
B: The film was slightly spread apart from the container, but sill acceptable without any practical problem; and
C: The film was not adhered along the container and spread apart therefrom, and unacceptable with a practical problem.

### (8) Adhesion to containers under low-temperature conditions:

In order to examine an adhesion property to a container under low-temperature conditions, the obtained film was stored under environmental conditions at -10°C for 24 hr. Thereafter, a bowl-shaped pottery container having a diameter of 10 cm and a depth of 5 cm was wrapped with the film to evaluate an adhesion of the film to the container under the above conditions according to the following ratings.
A: Adequately wrapped with the film;
B: The film was slightly spread apart from the container, but sill acceptable without any practical problem; and
C: The film was not adhered along the container and spread apart therefrom, and unacceptable with a practical problem.

### (9) Suitability of rewinding into a small roll:

When producing a wrap film, in view of a high productivity, it is usual that an elongated raw web film is first produced, and then rewound into a roll of a film having a length of 20 m, 50 m, 100 m, etc., according to the applications thereof (small roll). The resulting rolled-up film was accommodated in a box and delivered. The suitability of rewinding the film into a small roll is an important property upon production of the wrap film. Therefore, the obtained film was subjected to rewinding test at a take-up speed of 200 to 600 m/min to evaluate a rewinding suitability into a small roll according to the following ratings.
A: The film could be rewound into a small roll even at a take-up speed of 600 m/min without any practical problem;
B: The film could be rewound into a small roll at a take-up speed of not less than 200 m/min and less than 600 m/min without any practical problem; and
C: The film suffered from delamination and breakage in the course of rewinding it at a take-up speed of not less than 200 m/min and less than 600 m/min.

### (10) Cutting property:

The obtained film was accommodated in a carton box with a metallic sawtooth blade, and pulled out of the box and cut to evaluate easiness of cutting of the film according to the following ratings.
A: Usable upon cutting without a feeling of uncomfortableness;
B: A slight feeling of resistance occurred upon cutting, but still acceptable without any practical problem; and
C: The metallic sawtooth blade was bit into the wrap film with an excessive feeling of resistance upon cutting.

### Example 1:

The surface layer-forming composition was prepared by selecting a linear low-density polyethylene "SLL218" (density: 0.918 g/cm³; MFR: 2.3 g/10 min; biobased content: 87%) produced by Braskem S.A., and an acid-modified polyethylene "ADMER" having an adhesion property to a polyamide and a polyethylene resin, and mixing these resins at a ratio of the plant-derived polyethylene resin to the acid-modified polyethylene of 85/15. The intermediate layer-forming composition was prepared by selecting a polyamide 6 "AMILAN" (melting point: 225°C) produced by Toray Industries, Inc., as a polyamide resin. The thus prepared surface layer-forming composition and intermediate layer-forming composition were respectively charged into separate extruders, and melted and kneaded therein, and then the molten resins were merged into a three-layer T-die and co-extruded therethrough at a die temperature of 240°C and a die gap of 1 mm. The co-extruded resins were rapidly cooled on a casting roll held at 30°C, thereby obtaining a wrap film having a total thickness of 10 µm (surface layer/intermediate layer/surface layer = 3.75 µm/2.5 µm/3.75 µm). The evaluation results of the thus obtained film are shown in Table 1.

### Example 2:

The surface layer-forming composition was prepared by selecting a linear low-density polyethylene "SLL218" (density: 0.918 g/cm³; MFR: 2.3 g/10 min; biobased content: 87%) produced by Braskem S.A., as a plant-derived polyethylene resin. The intermediate layer-forming composition was prepared by selecting a polyamide 6 "AMILAN" (melting point: 225°C) produced by Toray Industries, Inc., as a polyamide resin.

Further, the adhesive layer-forming composition was prepared by selecting a linear low-density polyethylene "SLL218" (density: 0.918 g/cm³; MFR: 2.3 g/10 min) produced by Braskem S.A., and an acid-modified polyethylene "ADMER" having an adhesion property to a polyamide and a polyethylene resin, and mixing these resins at a ratio of the plant-derived polyethylene resin to the acid-modified polyethylene of 50/50. The thus prepared surface layer-forming composition, intermediate layer-forming composition and adhesive layer-forming composition were respectively charged into separate extruders, and melted and kneaded therein, and then the molten resins were merged into a five-layer T-die and co-extruded therethrough at a die temperature of 240°C and a die gap of 1 mm. The co-extruded resins were rapidly cooled on a casting roll held at 30°C, thereby obtaining a wrap film having a total thickness of 10 µm (surface layer/adhesive layer/intermediate layer/adhesive layer/surface layer = 3.25 µm/0.75 µm/2.0 µm/0.75 µm/3.25 µm). The evaluation results of the thus obtained film are shown in Table 1.

### Example 3:

The co-extrusion was conducted in the same manner in Example 2, thereby obtaining a raw web film having a total thickness of 25 µm (surface layer/adhesive layer/intermediate layer/adhesive layer/surface layer = 8.125 µm/1.875 µm/5.0 µm/1.875 µm/8.125 µm). Next, the thus obtained film was subjected to roll drawing and monoaxially drawn in MD at a drawing temperature of 110°C and at a draw ratio of 2.5 times, and then to heat-setting at 70°C, thereby obtaining a wrap film having a thickness of 10 µm. The evaluation results of the thus obtained film are shown in Table 1.

### Example 4:

The same procedure as in Example 2 was conducted except that the plant-derived polyethylene resin for the surface layer-forming composition was prepared by kneading a linear low-density polyethylene "SLL218" (density: 0.918 g/cm³; MFR: 2.3 g/10 min) produced by Braskem S.A., and a high-density polyethylene "SGE7252" (density: 0.953 g/cm³; MFR: 2.2 g/10 min; biobased content: 96%) produced by Braskem S.A., at a mixing ratio of "SLL218"/"SGE7252" of 85/15 to produce a mixed resin having a density of 0.923 g/cm³ and a biobased content of 88.4%, thereby obtaining a wrap film having a total thickness of 10 µm (surface layer/adhesive layer/intermediate layer/adhesive layer/surface layer = 3.25 µm/0.75 µm/2.0 µm/0.75 µm/3.25 µm). The evaluation results of the thus obtained film are shown in Table 1.

### Comparative Example 1:

The same procedure as in Example 2 was conducted except that the surface layer-forming composition was prepared by using a linear low-density polyethylene "NEO-ZEX 0234N" (density: 0.919 g/cm³; MFR: 2.0 g/10 min; biobased content: 0%) produced by Prime Polymer Co., Ltd., thereby obtaining a wrap film having a total thickness of 10 µm (surface layer/adhesive layer/intermediate layer/adhesive layer/surface layer = 3.25 µm/0.75 µm/2.0 µm/0.75 µm/3.25 µm). The evaluation results of the thus obtained film are shown in Table 1.

### Comparative Example 2:

The same procedure as in Comparative Example 1 was conducted except that pre-compounded pellets having the same composition as that of the intermediate layer used in Comparative Example 1 were charged into the extruder for forming the adhesive layer to produce substantially a three-layer film, thereby obtaining a wrap film having a total thickness of 10 µm (surface layer/intermediate layer/surface layer = 4.0 µm/2.0 µm/4.0 µm). The evaluation results of the thus obtained film are shown in Table 1.

### Comparative Example 3:

The same procedure as in Comparative Example 1 was conducted except that pre-compounded pellets having the same composition as that of each of the opposite surface layers used in Comparative Example 1 were charged into the extruders for forming the adhesive layer and intermediate layer, respectively, to produce substantially a single layer film, thereby obtaining a wrap film having a total thickness of 10 µm. The evaluation results of the thus obtained film are shown in Table 1.

### Comparative Example 4:

The same procedure as in Comparative Example 3 was conducted except that a polypropylene resin "VERSIFY" (density: 0.859 g/cm³; MFR: 2.0 g/10 min; biobased content: 0%) produced by The Dow Chemical Company was used as the raw material to be charged to produce substantially a single layer film, thereby obtaining a wrap film having a total thickness of 10 µm. The evaluation results of the thus obtained film are shown in Table 1.

**Table 1**

| | Examples | | | |
|---|---|---|---|---|
| | 1 | 2 | 3 | 4 |
| Surface layer | | | | |
| (A) | 85 | 100 | | 100 |
| Acid - modified polyethylene | 15 | 0 | 0 | 0 |
| Polypropylene | 0 | 0 | 0 | 0 |

| Adhesive layer | | | | |
|---|---|---|---|---|
| (A) | 0 | 50 | 50 | 50 |
| (B) | 0 | 0 | 0 | 0 |
| Acid-modified polyethylene | 0 | 50 | 50 | 50 |
| Polypropylene | 0 | 0 | 0 | 0 |

| Intermediate layer | | | | |
|---|---|---|---|---|
| (A) | 0 | 0 | 0 | 0 |
| (B) | 100 | 100 | 100 | 100 |
| Polypropylene | 0 | 0 | 0 | 0 |
| Storage elastic modulus (E') (MPa) | 375 | 417.0 | 417.0 | 459.0 |
| Average value of loss tangent (tanδ) at -40 to 0°C | 0.116 | 0.105 | 0.105 | 0.095 |
| Total thickness (µm) | 10.0 | 10.0 | 10.0 | 10.0 |
| Biobased content | 87.0 | 87.0 | 87.0 | 88.4 |
| Density of surface layer (g/cm³) | 0.918 | 0.918 | 0.918 | 0.919 |
| Film-forming stability | A | A | A | A |
| Production stability | A | A | A | A |
| Anti-blocking property | A | A | A | A |
| Adhesion property to containers | A | A | A | B |
| Adhesion property to containers under low temperature conditions | B | B | B | B |
| Rewinding suitability into a small roll | B | B | B | B |
| Cutting property | B | B | A | B |

| | Comparative Examples | | | |
|---|---|---|---|---|
| | 1 | 2 | 3 | 4 |
| Surface layer | | | | |
| (A) | 100 | 100 | 100 | 0 |
| Acid - modified polyethylene | 0 | 0 | 0 | 0 |
| Polypropylene | 0 | 0 | 0 | 100 |

| Adhesive layer | | | | |
|---|---|---|---|---|
| (A) | 50 | 0 | 100 | 0 |
| (B) | 0 | 100 | 0 | 0 |
| Acid-modified polyethylene | 50 | 0 | 0 | 0 |
| Polypropylene | 0 | 0 | 0 | 100 |

| Intermediate layer | | | | |
|---|---|---|---|---|
| (A) | 0 | 0 | 100 | 0 |
| (B) | 100 | 100 | 0 | 0 |
| Polypropylene | 0 | 0 | 0 | 100 |
| Storage elastic modulus (E') (MPa) | 761.0 | 837.0 | 584.0 | 58.0 |
| Average value of loss tangent (tanδ) at -40 to 0°C | 0.075 | 0.070 | 0.064 | 0.257 |
| Total thickness (µm) | 10.0 | 10.0 | 10.0 | 10.0 |
| Biobased content | 0 | 0 | 0 | 0 |
| Density of surface layer (g/cm³) | 0.919 | 0.919 | 0.919 | 0.859 |
| Film-forming stability | A | A | A | A |
| Production stability | A | B | B | B |
| Anti-blocking property | A | B | B | C |
| Adhesion property to containers | A | C | C | B |
| Adhesion property to containers under low temperature conditions | C | C | C | B |
| Rewinding suitability into a small roll | B | C | B | B |
| Cutting property | B | C | B | C |

It was confirmed that the wrap films obtained in Examples 1 to 4 satisfied the requirements of (1) a storage elastic modulus (E') at 20°C of 100 MPa to 4 GPa and an average value of loss tangent (tanδ) at -40 to 0°C of not less than 0.08; a biobased content of the plant-derived polyethylene resin of not less than 80%; and a density of the plant-derived polyethylene resin of 0.915 to 0,925 g/cm³, and therefore had a good cutting property and a good adhesion property to containers as required for forming a small wrap roll as well as a good adhesion property to containers under low-temperature environmental conditions, and attained the results capable of effectively utilizing exhaustible resources. In addition, it was also confirmed that the wrap films obtained in Examples 1 to 4 were all excellent in not only quality, but also film-forming stability upon production of the film, production stability and rewinding suitability into a small roll. The wrap film obtained in Example 3 as the sample produced after monoaxially drawing the film in MD at a draw ratio of 2.5 times was more excellent in cutting property than the wrap films obtained in the other Examples, and therefore provided the more preferred embodiment of the wrap film of the present invention. On the other hand, the wrap films obtained in Comparative Example 1 had an average value of loss tangent (tanδ) at -40 to 0°C of not more than 0.08, and as a result, was deteriorated in adhesion property to containers under low-temperature environmental conditions. In addition, it was confirmed that the wrap film obtained in Comparative Example 2 having a poor adhesion property was deteriorated in rewinding suitability into a small roll, adhesion property to containers, adhesion property to containers under low-temperature conditions and cutting property. Further, it was confirmed that the wrap film obtained in Comparative Example 3 having a single layer structure was capable of ensuring a good film-forming stability, but deteriorated in adhesion property to containers as well as adhesion property to containers under low-temperature conditions. Furthermore, it was confirmed that the wrap film obtained in Comparative Example 4 having a single layer structure had a storage elastic modulus (E') at 20°C of not more than 100 MPa, and therefore was deteriorated in anti-blocking property and cutting property.

## Claims

1. A wrap film which comprises a laminated film comprising at least three layers including an intermediate layer and both surface layers comprising a plant-derived polyethylene resin, and which has a storage elastic modulus (E') at 20°C of 100 MPa to 4 GPa and an average loss tangent (tanδ) at -40 to 0°C of not less than 0.08 as measured at an oscillation frequency of 10 Hz and a distortion of 0.1% by a dynamic viscoelasticity measuring method described in the Method A of JIS K 7198, wherein the plant-derived polyethylene resin has a biobased content of not less than 80% as measured according to ASTM D 6866 and wherein the plant-derived polyethylene resin is a composition comprising one or more resins selected from the group consisting of a linear low-density polyethylene and a high-density polyethylene which are produced using ethanol extracted from sugar cane, wherein the plant-derived polyethylene resin comprises one or two mixed components and has density of 0.915 to 0.925 g/cm³, wherein the ratio of the thickness of the intermediate layer to a whole thickness of the wrap film is 10 to 30%, and wherein the intermediate layer comprises any of an aliphatic polyamide polymer, an ethylene-vinyl alcohol copolymer and a polypropylene as a main component.

2. The wrap film according to claim 1, wherein the intermediate layer comprises polyamide 6, polyamide 11, an ethylene-vinyl alcohol copolymer and a polypropylene.

## Patentansprüche

1. Verpackungsfolie, die eine laminierte Folie umfasst, umfassend mindestens drei Schichten einschließlich einer Zwischenschicht, und wobei beide Oberflächenschichten ein von Pflanzen abgeleitetes Polyethylenharz umfassen, und welche einen Speicher-Elastizitätsmodul (E') bei 20°C von 100 MPa bis 4 GPa und einen durchschnittlichen Verlusttangens (tanδ) bei -40 bis 0°C von nicht weniger als 0,08, wie gemessen bei einer Oszillationsfrequenz von 10 Hz, und eine Verformung von 0,1% mittels einer dynamischen Viskoelastizitätsmessmethode, wie beschrieben in Methode A der JIS K 7198, aufweist, wobei das von Pflanzen abgeleitete Polyethylenharz einen biobasierten Gehalt von nicht weniger als 80% aufweist, wie gemessen gemäß ASTM D 6866, und wobei das von Pflanzen abgeleitete Polyethylenharz eine Zusammensetzung ist, umfassend ein oder mehrere Harze, gewählt aus der Gruppe, bestehend aus einem linearen Polyethylen geringer Dichte und einem Polyethylen hoher Dichte, welche unter Verwendung von Ethanol, extrahiert aus Zuckerrohr, hergestellt sind, wobei das von Pflanzen abgeleitete Polyethylenharz eine oder zwei gemischte Komponenten umfasst und eine Dichte von 0,915 bis 0,925 g/cm³ aufweist, wobei das Verhältnis der Dicke der Zwischenschicht zu der Gesamtdicke der Verpackungsfolie 10 bis 30% beträgt, und wobei die Zwischenschicht irgendeines aus einem aliphatischen Polyamidpolymer, einem Ethylen-Vinylalkohol-Copolymer und einem Polypropylen als eine Hauptkomponente umfasst.

2. Verpackungsfolie nach Anspruch 1, wobei die Zwischenschicht Polyamid 6, Polyamid 11, ein Ethylen-Vinylalkohol-Copolymer und ein Polypropylen umfasst.

## Revendications

1. Un film d'enveloppe qui comprend un film stratifié comprenant au moins trois couches comprenant une couche intermédiaire et les deux couches de surface comprenant une résine de polyéthylène d'origine végétale, et qui présente un module d'élasticité au stockage (E') à 20 °C de 100 MPa à 4 GPa et une tangente de perte moyenne (tan δ) à -40 à 0 °C d'au moins 0,08 mesurée à une fréquence d'oscillation de 10 Hz et à une distorsion de 0,1% par une méthode de mesure dynamique de la viscoélasticité décrite dans la méthode A du JIS K 7198, dans lequel la résine de polyéthylène d'origine végétale a une teneur en produits d'origine biologique d'au moins 80%, telle que mesurée conformément à la norme ASTM D 6866, et dans lequel la résine de polyéthylène est une composition comprenant une ou plusieurs résines choisies parmi le groupe constitué d'un polyéthylène linéaire de basse densité et d'un polyéthylène de haute densité, produites à l'aide d'éthanol extrait du sucre de canne, dans lequel la résine de polyéthylène d'origine végétale comprend un ou deux composants mélangés et a une densité de 0,915 à 0,925 g / cm³, dans lequel le rapport de l'épaisseur de la couche intermédiaire à la totalité de l'épaisseur du film d'enveloppe est de 10 à 30%, et dans lequel la couche intermédiaire comprend un polymère polyamide aliphatique, un copolymère d'éthylène et d'alcool vinylique et un polypropylène en tant que composant principal.

2. Le film d'enveloppe selon la revendication 1, dans lequel le film d'enveloppe comprend une couche intermédiaire comprenant du polyamide 6, du polyamide 11, un copolymère d'éthylène et d'alcool vinylique et un polypropylène.
